# EUROPÄISCHE PATENTSCHRIFT

(11) **EP 3 027 458 B1**
(45) Veröffentlichungstag und Bekanntmachung des Hinweises auf die Patenterteilung: **31.05.2017**
(21) Anmeldenummer: 14744773.4
(22) Anmeldetag: 28.07.2014
(51) Int. Cl.: B60K 37/02, B60Q 3/00, G01D 11/28

(54) **BELEUCHTUNG FÜR EINE INSTRUMENTENTAFEL EINES FAHRZEUGS**
LIGHTING FOR A DASHBOARD OF A VEHICLE
DISPOSITIF D'ÉCLAIRAGE POUR TABLEAU DE BORD DE VÉHICULE

(30) Priorität: 31.07.2013 DE 102013012703
(43) Veröffentlichungstag der Anmeldung: 08.06.2016
(73) Patentinhaber: Audi AG, 85045 Ingolstadt (DE)
(72) Erfinder: SCHWANTNER, Stephan, 85125 Haunstetten (DE)
(74) Vertreter: Thielmann, Frank
(86) Internationale Anmeldenummer: PCT/EP2014/002054
(87) Internationale Veröffentlichungsnummer: WO 2015/014471

(56) Entgegenhaltungen:
- WO-A1-2007/022202
- WO-A1-2013/047896
- DE-A1-102005 019 621
- DE-A1-102011 084 899

## Beschreibung

Die vorliegende Erfindung betrifft eine Beleuchtungsvorrichtung für eine vorgegebene Instrumententafel eines Fahrzeugs, welche Instrumententafel wenigstens ein Instrument zur Anzeige einer Zustndsgröße des Fahrzeugs aufweist, mit einer Lichtquelle und einem Lichtleitkörper, in den Licht von der Lichtquelle eingekoppelt und geführt wird, wobei der Lichtleitkörper einen vorgegebenen Lichtaustrittsbereich aufweist, durch den Licht aus dem Lichtleitkörper austritt. Die Erfindung betrifft ferner ein Fahrzeug mit einer Instrumententafel, welche wenigstens ein Instrument zur Anzeige einer Zustandsgröße des Fahrzeugs aufweist, und mit einer Beleuchtungsvorrichtung, die eine Lichtquelle und einen Lichtleitkörper aufweist, in dem Licht von der Lichtquelle eingekoppelt und geführt wird, wobei der Lichtkörper einen Lichtaustrittsbereich aufweist, durch den Licht aus dem Lichtleitkörper austritt. Gattungsgemäße Beleuchtungsvorrichtungen sind dem Grunde nach im Stand der Technik bekannt, so dass es eines gesonderten druckschriftlichen Nachweises hierfür nicht bedarf. Beleuchtungsvorrichtungen der gattungsgemäßen Art dienen unter anderem der Beleuchtung eines oder mehrerer Instrumente der Instrumententafel, so dass diese auch bei ungünstigen Lichtverhältnissen vom einem Fahrer des Fahrzeugs zuverlässig abgelesen werden können. Zu diesem Zweck ist die Beleuchtung in bestimmungsgemäßer Weise eingestellt, so dass der Fahrer, insbesondere in der Dämmerung oder in der Dunkelheit, das Instrument ablesen kann. Das Instrument kann beispielsweise eine Geschwindigkeitsanzeige, eine Drehzahlanzeige, eine Tankfüllstandsanzeige, Kombinationen hiervon oder andere umfassen. Natürlich können auch mehrere Instrumente zugleich vorgesehen sein, die mit einer gemeinsamen Beleuchtungsvorrichtung versehen sind.

Die Beleuchtungsvorrichtung zur Beleuchtung eines Instruments ist dabei derart ausgelegt, dass sie einerseits den ablesenden Fahrer nicht unnötigerweise blendet und andererseits in Abhängigkeit der möglichen Lichtverhältnisse dennoch ein zuverlässiges Ablesen erlaubt. Eine solche Beleuchtungsvorrichtung ist beispielsweise aus der DE 600 29 729 T2 bekannt. Eine Beleuchtungsvorrichtung mit den Merkmalen des Oberbegriffs des Anspruchs 1 zeigt die DE 10 2011 084 899 A1.

Solche Beleuchtungen dienen in der Regel ausschließlich zur Beleuchtung von Instrumenten und müssen deshalb bestimmten Anforderungen hinsichtlich der Sicherheit genügen, die eine gegebenenfalls vorhandene Einstellbarkeit begrenzen. Sie sind adaptiert für den Zweck der Instrumentenbeleuchtung und eignen sich folglich nur ungenügend, um eine Ambientebeleuchtung, insbesondere außerhalb des Instruments, bereitzustellen.

Daraus ergibt sich die Aufgabe der Erfindung, eine Beleuchtungsvorrichtung der gattungsgemäßen Art dahingehend weiterzubilden, dass eine Ambientebeleuchtung flexibel gestaltet werden kann.

Als vorrichtungsseitige Lösung wird bei einer gattungsgemäßen Beleuchtungsvorrichtung vorgeschlagen, dass der der Lichtleitkörper ausgebildet ist, die vorgegebene Instrumententafel zumindest bereichsweise zu umgeben, und der Lichtaustrittsbereich derart ausgebildet ist, dass das vom Lichtleitkörper ausgesandte Licht in einem bestimmungsgemäß an die vorgegebene Instrumententafel angebauten Zustand hauptsächlich in eine von dem Instrument abgewandte Richtung strahlt. Insbesondere ist Lichtaustrittsbereich derart ausgebildet, dass das vom Lichtleitkörper ausgesandte Licht in einem bestimmungsgemäß an die vorgegebene Instrumententafel angebauten Zustand hauptsächlich in eine von der vorgegebenen Instrumententafel abgewandte Richtung strahlt, wobei der Lichtaustrittsbereich ferner ausgebildet ist, mit dem aus ihm austretenden Licht einen Absatz, auf dem das Ziffernblatt angeordnet ist, seitlich zu beleuchten. Hauptsächlich in eine von der vorgegebenen Instrumententafel abgewandte Richtung meint, dass das Licht im wesentlichen nicht auf die Anzeige des Instruments trifft. Es kann zu diesem Zweck radial von dem Instrument fort gerichtet sein. Darüber hinaus kann das Licht aber auch - räumlich betrachtet - in einer abweichenden Ebene zum Instrument hin gerichtet sein. Dadurch kann eine Beleuchtung der Anzeige des Instruments durch die Beleuchtungsvorrichtung der Erfindung weitgehend vermieden werden.
Mit der Erfindung kann demnach eine Beleuchtungsvorrichtung vorgesehen sein, die nicht das Instrument selbst, sondern einen Bereich außerhalb des Instruments, insbesondere um das Instrument herum, ausleuchtet. Dadurch kann eine Ambientebeleuchtung erreicht werden, die zur Herstellung von Lichteffekten, insbesondere im Bereich der Instrumententafel aber auch von ihr fortgerichtet, dient. Ist eine entsprechende Beleuchtungsvorrichtung für eine Ambientebeleuchtung vorhanden, kann diese unabhängig von der Beleuchtungsvorrichtung für die Instrumententafel des Fahrzeugs gesteuert werden. Einstellungen der Beleuchtungsvorrichtung wirken sich deshalb nicht zugleich auf die Beleuchtung des Instruments aus. Hierdurch ist die Möglichkeit einer vorzugsweise unabhängigen Ambientebeleuchtung geschaffen.

Die Instrumententafel kann beispielsweise ein Armaturenbrett oder dergleichen des Fahrzeugs sein. Ein Instrument kann eine Anzeige aber auch ein Betätigungselement wie ein Schalter, ein Einstelldrehknopf oder dergleichen sowie Kombinationen hiervon sein.

Diese Ausgestaltung gemäß der Erfindung erlaubt es, nicht nur die Beleuchtung des Instruments von der Ambientebeleuchtung zu entkoppeln, sondern zugleich auch die Beleuchtungsvorrichtung für eine Ambientebeleuchtung derart auszugestalten, dass sie selbst einen Teil einer Dekoration bildet. Insbesondere kann der Lichtleitkörper Teil eines Dekorationselements sein. Dadurch kann erreicht werden, dass eine instrumentenabgewandte Beleuchtung, das heißt, eine Beleuchtung, die vorzugsweise ausschließlich außerhalb des Instruments erfolgt, erreicht werden kann. Dadurch ist es ferner möglich, die Ambientebeleuchtung bedarfsgerecht beziehungsweise wunschgemäß unabhängig von einer Instrumentenbeleuchtung einzustellen und zugleich sicherzustellen, dass die Ambientebeleuchtung nicht in unerwünschter Weise auf die Beleuchtung des Instruments einwirkt. Weiterhin kann vermieden werden, dass mit der Ambientebeleuchtung beispielsweise eine Ablesbarkeit des Instruments unter unterschiedlichen Beleuchtungsbedingungen beeinträchtigt wird. Zugleich kann mit dem als Dekorationselement ausgebildeten Lichtleitkörper eine Integration und ein ansprechendes Design der Beleuchtungsvorrichtung in die Instrumententafel erreicht werden.

Der Lichtleitkörper kann beispielsweise aus einem lichtleitenden, anorganischen Werkstoff wie Glas oder auch durch einen Polymerwerkstoff wie Polykarbonat (PC), Polymehtylmethacrylat (PMMA) oder dergleichen gebildet sein. Er kann ferner eine semitransparente und/oder lichtundurchlässige Beschichtung aufweisen, die beispielsweise durch eine Lackierung, einen semitransparenten oder lichtundurchlässigen Kunststoff, ein Harz oder dergleichen gebildet sein kann. Die Beschichtung ist vorzugsweise mit dem Lichtaüstrittsbereich versehen, der beispielsweise dadurch gebildet sein kann, dass im Lichtaustrittsbereich keine Beschichtung vorhanden ist oder auch dadurch, dass die Beschichtung im Lichtaustrittsbereich durch eine transparente Beschichtung gebildet ist. Vorzugsweise ist die Beschichtung im Lichtaustrittsbereich entfernt. Dadurch ist in diesem Bereich der Lichtleitkörper beschichtungsfrei, so dass auf einfache Weise im Lichtleitkörper geführtes Licht aus diesem austreten kann. Dadurch kann in hochflexibler Weise auch bei komplexen Lichtleitkörpern eine gewünschte Beleuchtung, insbesondere Ambientebeleuchtung, erreicht werden.

Gemäß einer weiteren Ausgestaltung ist im Lichtaustrittsbereich zumindest teilweise ein lichtstreuendes Element angeordnet. Mit dem lichtstreuenden Element kann die im Lichtaustrittsbereich austretende Lichtmenge beeinflusst werden. Beispielsweise kann der Bereich mit einer aufgerauten Oberfläche versehen sein, so dass es Lichtstrahlen erleichtert ist, aus dem Lichtleitkörper durch den Lichtaustrittsbereich hindurch auszutreten. Ein lichtstreuendes Element kann aber auch durch Zusatzstoffe im Lichtleitkörper im Lichtaustrittsbereich gebildet sein, so dass Licht im Lichtleitkörper an diesen Stoffen gebeugt beziehungsweise gestreut wird und durch den Lichtaustrittsbereich aus dem Lichtleitkörper austreten kann. Natürlich kann hierdurch auch eine reduzierte Wirkung des Lichtaustritts erreicht werden, indem zum Beispiel reflektierende Elemente im Lichtleitkörper angeordnet werden. In diesem Fall wird ein Teil des Lichts, welches ansonsten durch den Lichtaustrittsbereich aus dem Lichtleitkörper austreten würde, wieder zurück in den Lichtleitkörper reflektiert. Mit den lichtstreuenden Elementen kann somit ein Lichtstrom eingestellt werden.

Gemäß einer weiteren Ausgestaltung weist die Beleuchtungsvorrichtung ein Farbeinstellelement für die Farbe des vom Lichtleitkörper ausgesandten Lichts auf. Das Farbeinstellelement kann beispielsweise eine Filterscheibe sein, die im Bereich der Kopplung des Lichtleitkörpers an die Lichtquelle vorgesehen ist. Der Lichtleitkörper führt dann nur das Licht, das mittels des Filterelements eingestellt ist. Das Farbeinstellelement kann auch variabel sein, so dass die Farbe verändert werden kann. Hierzu können beispielsweise Farbscheiben oder dergleichen vorgesehen sein, die Filterelemente für unterschiedliche Farben aufweisen und die gemäß der gewünschten Farbe jeweils eingestellt werden. Hierzu kann eine automatische Steuerung vorgesehen sein. Darüber hinaus kann natürlich auch vorgesehen sein, dass ein Farbeinstellelement im Bereich des Lichtaustrittsbereichs angeordnet ist. Dies erlaubt es, bei mehreren Lichtaustrittsbereichen des Lichtleitkörpers diese mit unterschiedlichen Farbeinstellelementen zu versehen und dadurch unterschiedliche Farbwirkungen zu erreichen.

Eine weitere Ausgestaltung sieht vor, dass der Lichtaustrittsbereich ein optisches Filter aufweist. Der optische Filter kann beispielsweise ein Polarisationsfilter oder auch ein Farbfilter oder dergleichen sein. Hierdurch kann das durch den Lichtaustrittsbereich austretende Licht in gewünschter Weise behandelt werden, so dass besondere optische Lichteffekte, vorzugsweise im Rahmen einer Ambientebeleuchtung, erreichbar sind.

Eine weitere Ausgestaltung sieht vor, dass die Lichtquelle unabhängig von anderen Lichtquellen individuell einstell- und/oder steuerbar ist. Hierdurch kann erreicht werden, dass der Fahrer beziehungsweise ein Mitfahrer die Ambientebeleuchtung wunschgemäß einstellen kann. Besonders vorteilhaft erweist es sich dabei, dass eine Instrumentenbeleuchtung hiervon im Wesentlichen nicht beeinflusst werden braucht. Dadurch können Auswirkungen hinsichtlich der Sicherheit, insbesondere bezüglich des Ablesens von Instrumenten der Instrumententafel weitgehend vermieden werden.

Darüber hinaus erlaubt es diese Ausgestaltung, dass die Lichtquelle gemäß eines Informationssignals steuerbar ist. Hierdurch kann die durch die Beleuchtungsvorrichtung bewirkte Beleuchtung beispielsweise zur Erzeugung einer besonderen Ambientebeleuchtungsabfolge gesteuert werden. Darüber hinaus ergibt sich die Möglichkeit, die Lichtquelle gemäß eines Informationssignals zu steuern und so Fahrzeuginsassen entsprechend des Informationssignals zu informieren. So kann beispielsweise vorgesehen sein, dass bei einer Warn- oder Alarmmeldung die Farbe der Beleuchtung geändert wird. Darüber hinaus besteht die Möglichkeit, Lichtschwankungen hinsichtlich der Beleuchtungsintensität vorzusehen, um eine bestimmte Meldung auszugeben. Zu diesem Zweck kann die Beleuchtung mit einer vorgebbaren Frequenz schwanken oder auch takten. Auch Kombinationen hiervon können für verschiedene Informationen vorgesehen sein.

Mit der Erfindung wird ferner ein gattungsgemäßes Fahrzeug vorgeschlagen, wobei die Beleuchtungsvorrichtung gemäß der Erfindung ausgebildet ist. Dadurch können mit dem Fahrzeug die Vorteile der erfindungsgemäßen Beleuchtungsvorrichtung nutzbar gemacht werden.

Mit der Erfindung wird ferner ein Verfahren zur Herstellung eines Lichtleitkörpers für eine Beleuchtungsvorrichtung gemäß der Erfindung vorgeschlagen, mit den Schritten:
- Herstellen eines Lichtleitkörperrohlings aus einem lichtleitenden Werkstoff,
- Maskieren eines Lichtaustrittsbereichs und eines Bereichs zum Einkoppeln von Licht einer Lichtquelle,
- Galvanisieren des Lichtleitkörperrohlings, sodass eine Chromschicht als Beschichtung auf der Oberfläche des Lichtleitkörperrohlings entsteht und
- Entfernen der Maskierung.

Der Lichtleitkörperrohling kann entsprechend des gewählten Werkstoffs beispielsweise durch Spritzen, Gießen, Pressen oder dergleichen hergestellt werden. Der lichtleitende Werkstoff kann beispielsweise Polykarbonat, Polymehtylmethacrylat, Glas, Acrylglas oder dergleichen sein. Der hierbei hergestellte Lichtleitkörperrohling wird in einem nächsten Schritt im Bereich der vorgesehenen Lichtaustrittsbereiche maskiert. Gleiches erfolgt für den Bereich zum Einkoppeln von Licht der Lichtquelle. Der so maskierte Lichtleitkörperrohling wird sodann mit einer Metallisierung, insbesondere einer Chromschicht als Beschichtung, auf der Oberfläche versehen. Dies erfolgt vorzugsweise durch Galvanisieren. Im Bereich der Maskierungen erfolgt keine Beschichtung, so dass an diesen Stellen die Lichtaustrittsbereiche gebildet sind. Anschließend erfolgt das Entfernen der Maskierung, beispielsweise durch Abtragen der Maskierung oder auch durch eine Bearbeitung, die die Maskierung für den Lichtdurchtritt transparent macht. Beispielsweise kann bei einem ringförmigen Lichtleitkörper ein umlaufender Lichtaustrittsring abmaskiert werden, um diesen Bereich frei von der Beschichtung zu halten. Aus diesem Bereich tritt bei dem fertigen, in der bestimmungsgemäßen Anwendung eingebauten Lichtleitkörper das Licht insbesondere als Ambientebeleuchtung aus. Dabei kann eine separate Lichtquelle oder auch eine bereits für eine Hintergrundbeleuchtung vorhandene Lichtquelle genutzt werden.

Als besonders vorteilhaft erweist es sich, wenn eine transparente Maskierung verwendet wird. Dadurch kann nämlich der Schritt des Entfernens der Maskierung eingespart werden. Die Maskierung verbleibt dann beim Licht-austrittsbereich und kann zugleich eine Schutzschicht bilden, durch die der Lichtaustrittsbereich vor äußeren Einwirkungen geschützt ist.

Gemäß einer weiteren Ausgestaltung wird ein lichtstreuender Werkstoff beim Herstellen des Lichtleitkörperrohlings verwendet. Dadurch kann erreicht werden, dass Strahlungseigenschaften des Lichtleitkörpers in vorgebbarer Weise beeinflusst werden. So kann vorgesehen sein, dass der lichtstreuende Werkstoff vorzugsweise im Bereich des Lichtaustrittsbereichs angeordnet ist. Dies erlaubt es, dass Licht, das durch den Lichtaustrittsbereich austritt, in einem möglichst großen Raumwinkel austreten kann, um eine gewünschte angenehme Ambientebeleuchtung erreichen zu können. Lichtstreuende Werkstoffe können aber nicht nur Werkstoffe sein, die das Licht in ihre Richtung umlenken, sondern sie können auch durch Werkstoffe gebildet sein, die fluoreszierende oder phosphoreszierende Eigenschaften zur Folge haben. Dadurch lassen sich weitere Ambientebeleuchtungseffekte erzielen.

Die Ambientebeleuchtung kann nicht nur in Richtung des Instruments, sondern auch, insbesondere nach außen, zum Beispiel auf eine Designfläche, gerichtet sein. Darüber hinaus kann die Ambientebeleuchtung gerichtet, gebündelt oder auch mit anderen optischen Effekten aus der Lichtleittechnik aufgewertet werden.

Weitere Vorteile und Merkmale sind der folgenden Beschreibung eines Ausführungsbeispiels zu entnehmen. Das Ausführungsbeispiel dient lediglich der Erläuterung der Erfindung und soll diese nicht beschränken.

Es zeigen:
- Fig. 1: eine Beleuchtungsvorrichtung gemäß der Erfindung für eine Anzeigeeinheit im Cockpit eines Fahrzeugs; und
- Fig. 2: in schematischer Darstellung einen Ausschnitt entlang der Linie I-I in Fig. 1.

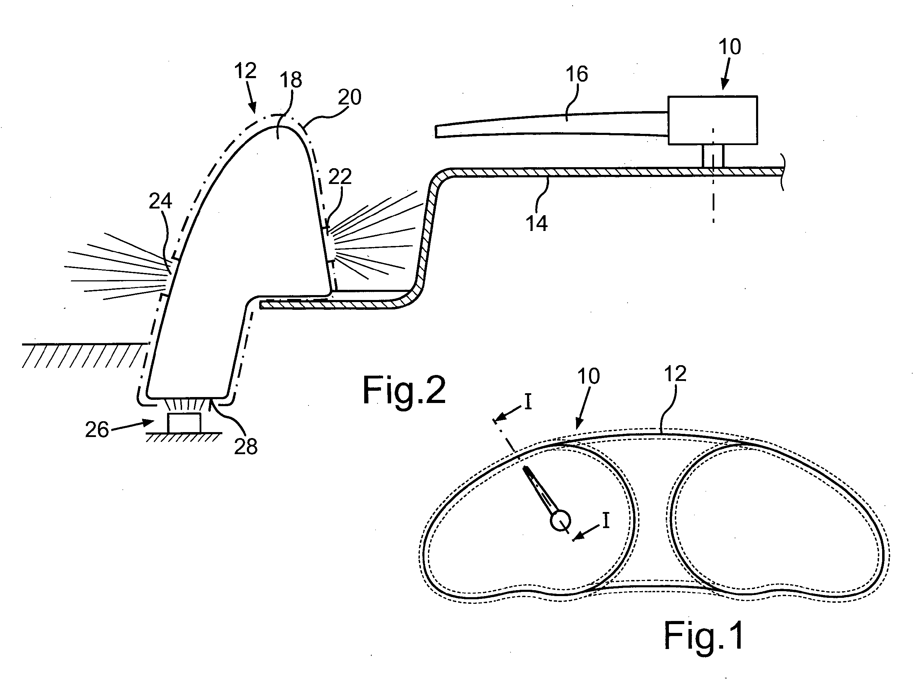

Fig. 1 zeigt in schematischer Draufsicht eine Beleuchtungsvorrichtung für eine Instrumententafel eines Fahrzeugs in Form eines lichtleitenden Körpers 18 aus Polykarbonat mit einer Metallisierung aus Chrom als Beschichtung 20. Der hierdurch gebildete Lichtleitkörper 18 ist Teil eines Dekorationselements, das vorliegend als Einfassung für eine Geschwindigkeitsanzeige und eine Drehzahlanzeige als Instrument des Fahrzeugs dient. Das Dekorationselement ist mit dem Bezugszeichen 12 gekennzeichnet. Das Instrument für die ist in Fig. 1 mit dem Bezugszeichen 10 gekennzeichnet.

Die Beleuchtungsvorrichtung ist somit für eine Instrumententafel eines Fahrzeugs vorgesehen, die als Instrument 10 zur Anzeige die Drehzahlanzeige und die Geschwindigkeitsanzeige aufweist. Aus Fig. 1 ist ersichtlich, dass das aus dem Lichtleitkörper 12 im Lichtaustrittsbereich austretende Licht nicht zur Beleuchtung des Instruments 10 selbst dient, sondern lediglich als Ambientebeleuchtung. Die Beleuchtung des Instruments 10 selbst ist unabhängig hiervon und entsprechend der sicherheitstechnischen und gesetzlichen Anforderungen ausgebildet, anders als die Beleuchtungsvorrichtung der Erfindung gemäß Fig. 1. Insofern ist die Beleuchtungsvorrichtung der Erfindung vorliegend zur Erzeugung einer Ambientebeleuchtung vorgesehen. Das Dekorationselement 12 ist derart ausgebildet, dass es das Instrument 10 umschließt.

Fig. 2 zeigt einen Schnitt entlang einer Linie I-I in Fig. 1, der einen Ausschnitt durch einen Teil der Geschwindigkeitsanzeige des Instruments 10 und das Dekorationselement 12 zeigt. Das Dekorationselement 12 umschließt die Geschwindigkeitsanzeige 10, die einen Zeiger 16 sowie ein darunter angeordnetes Ziffernblatt 14 umfasst. Das Ziffernblatt 14 ist auf einem Absatz angeordnet und verfügt über eine eigene, nicht dargestellte Beleuchtungsvorrichtung. Diese Beleuchtung ist derart eingestellt, dass ein Fahrer mittels Erfassen der Position des Zeigers 16 gegenüber dem Ziffernblatt 14 die Geschwindigkeit seines Fahrzeugs ablesen kann.

Aus Fig. 2 ist ferner ersichtlich, dass das Dekorationselement 12 einen Lichtleitkörper 18 aufweist, der mit einer Beschichtung 20 aus Chrom versehen ist. Die Beschichtung 20 ist entlang der Erstreckung des Lichtleitkörpers 18, der vorliegend aus Polykarbonat gebildet ist, mit Lichtaustrittsbereichen 22, 24 versehen, in denen keine Beschichtung 20 vorgesehen ist. Aus diesen Lichtaustrittsbereichen 22, 24 tritt Licht aus dem Lichtleitkörper 18 aus. Dieses Licht dient ausschließlich zur Erzeugung einer Ambientebeleuchtung. Insbesondere ist keine Beleuchtung des Instruments vorgesehen. Aus Fig. 2 ist ersichtlich, dass die Beleuchtung nicht zur Beleuchtung des Ziffernblatts 14 dient, sondern lediglich zur Erzeugung eines vorzugsweise moderaten Lichteffekts aus designtechnischen Gründen außerhalb eines Anzeigebereichs des Instruments 10. So wird mit dem aus dem Lichtaustrittsbereich 22 austretenden Licht der Absatz, auf dem das Ziffernblatt 14 angeordnet ist, seitlich beleuchtet. Eine Beleuchtung des Ziffernblatts 14 oder des Zeigers 16 ist nicht bewirkt. Das aus dem Lichtaustrittsbereich 24 austretende Licht beleuchtet eine das Instrument 10 nach außen umgebende Fläche.

In einem unteren Bereich weist der Lichtleitkörper 18 eine Einkoppelstelle 28 auf, der eine Lichtquelle 26 gegenüberliegt. Die Lichtquelle 26 erzeugt Licht, welches über die Einkoppelstelle 28 in den Lichtleitkörper 18 eingekoppelt und durch diesen zu den Lichtaustrittsbereichen 22, 24 geführt wird. Die Lichtquelle 26 kann beispielsweise durch eine oder mehrere Leuchtdioden gebildet sein, sie kann aber auch durch Glühlampen, Glimmlampen, Kombinationen hiervon oder dergleichen gebildet sein.

Das vom Dekorationselement 12 ausgesandte Licht bewirkt eine Beleuchtung außerhalb des Instruments 10.

Die Lichtquelle 26 kann gemäß einer weiteren Ausgestaltung auch gesteuert werden, beispielsweise um dem Fahrer einen Warnhinweis zu geben. So kann beispielsweise die Lichtstärke bei Überschreiten einer vorgebbaren Geschwindigkeitsgrenze verändert werden. Darüber hinaus kann die Lichtstärke auch kontinuierlich in Abhängigkeit von der Geschwindigkeit oder einer Motordrehzahl variieren. Es können aber auch externe Signale zur Anzeige gebracht werden, beispielsweise ein Ändern der Leuchtstärke oder der Leuchtfarbe in Abhängigkeit des Einhaltens eines Sicherheitsabstandes zu einem vorausfahrenden Fahrzeug oder dergleichen.

Die vorgenannten Ausführungsbeispiele dienen lediglich der Erläuterung der Erfindung und sollen diese nicht beschränken. Insbesondere können natürlich Merkmale und Ausführungsbeispiele in beliebiger Weise miteinander kombiniert werden, um zu weiteren bedarfsgerechten Ausgestaltungen zu gelangen, ohne den Gedanken der Erfindung zu verlassen.

Das Ausführungsbeispiel dient lediglich der Erläuterung der Erfindung und soll diese nicht beschränken.

## Patentansprüche

1. Beleuchtungsvorrichtung für eine Instrumententafel eines Fahrzeugs, welche Instrumententafel wenigstens ein Instrument (10) zur Anzeige einer Zustandsgröße des Fahrzeugs aufweist, wobei das Instrument (10) ein Ziffernblatt (14) aufweist, mit einer Lichtquelle (26) und einem Lichtleitkörper (18), in den Licht von der Lichtquelle (26) eingekoppelt und geführt wird, wobei der Lichtleitkörper (18) einen vordefinierten Lichtaustrittsbereich aufweist, durch den Licht aus dem Lichtleitkörper (18) austritt, wobei der Lichtleitkörper (18) ausgebildet ist, die vorgegebene Instrumententafel zumindest bereichsweise zu umgeben, wobei der Lichtaustrittsbereich (22) derart ausgebildet ist, dass das vom Lichtleitkörper (18) ausgesandte Licht in einem bestimmungsgemäß an die vorgegebene Instrumententafel angebauten Zustand hauptsächlich in eine von dem Instrument (10) abgewandte Richtung strahlt, **dadurch gekennzeichnet, dass** der Lichtaustrittsbereich (22) ferner ausgebildet ist, mit dem aus dem Lichtaustrittsbereich (22) austretenden Licht einen Absatz, auf dem das Ziffernblatt (14) angeordnet ist, seitlich zu beleuchten.

2. Beleuchtungsvorrichtung nach Anspruch 1, **dadurch gekennzeichnet, dass** der Lichtleitkörper (18) mit einer semitransparenten und/oder lichtundurchlässigen Beschichtung (20) versehen ist.

3. Beleuchtungsvorrichtung nach Anspruch 2, **dadurch gekennzeichnet, dass** die Beschichtung (20) im Lichtaustrittsbereich (22, 24) entfernt ist.

4. Beleuchtungsvorrichtung nach einem der Ansprüche 1 bis 3, **dadurch gekennzeichnet, dass** im Lichtaustrittsbereich (22, 24) zumindest teilweise ein lichtstreuendes Element angeordnet ist.

5. Beleuchtungsvorrichtung nach einem der Ansprüche 1 bis 4, **gekennzeichnet durch** ein Farbeinstellelement für die Farbe des vom Lichtleitkörper (18) ausgesandten Lichts.

6. Beleuchtungsvorrichtung nach einem der Ansprüche 1 bis 5, **dadurch gekennzeichnet, dass** der Lichtaustrittsbereich (22, 24) ein optisches Filter aufweist.

7. Beleuchtungsvorrichtung nach einem der Ansprüche 1 bis 6, **dadurch gekennzeichnet, dass** die Lichtquelle (26) unabhängig von anderen Lichtquellen individuell einstell- und/oder steuerbar ist.

8. Beleuchtungsvorrichtung nach Anspruch 7, **dadurch gekennzeichnet, dass** die Lichtquelle (26) gemäß eines Informationssignals steuerbar ist.

9. Fahrzeug mit einer Instrumententafel, welche wenigstens ein Instrument (10) zur Anzeige einer Zustandsgröße des Fahrzeugs aufweist, und mit einer Beleuchtungsvorrichtung, die eine Lichtquelle (26) und einen Lichtleitkörper (18) aufweist, in dem Licht von der Lichtquelle (26) eingekoppelt und geführt wird, wobei der Lichtleitkörper (18) einen Lichtaustrittsbereich aufweist, aus dem Licht aus dem Lichtleitkörper austritt, wobei die Beleuchtungsvorrichtung nach einem der vorhergehenden Ansprüche ausgebildet ist.

## Claims

1. Lighting device for a dashboard of a vehicle, which dashboard as at least one instrument (10) for displaying a state variable of the vehicle, the instrument (10) having a dial (14), comprising a light source (26) and a light-guide body (18) into which light from the light source (26) is coupled and guided, the light-guide body (18) having a predefined light exit region through which light emerges from the light-guide body (18), the light-guide body (18) being configured in order to surround the dashboard at least in regions,
the light exit region (22) being configured in such a way that light emitted by the light-guide body (18) in a state when fitted as intended to the aforementioned dashboard shines principally in a direction facing away from the instrument (10),
**characterised in that** the light exit region (22) is furthermore configured to laterally illuminate a step, on which the dial (14) is arranged, with light emitted from the light exit region (22).

2. Lighting device according to claim 1, **characterised in that** the light-guide body (18) is provided with a semitransparent and/or opaque coating (20).

3. Lighting device according to claim 2, **characterised in that** the coating (20) is removed in the light exit region (22, 24).

4. Lighting device according to any one of claims 1 to 3, **characterised in that** a light-scattering element is arranged at least partially in the light exit region (22, 24).

5. Lighting device according to any one of claims 1 to 4, **characterised by** a colour adjustment element for the colour of the light emitted by the light-guide body (18).

6. Lighting device according to any one of claims 1 to 5, **characterised in that** the light exit region (22, 24) comprises an optical filter.

7. Lighting device according to any one of claims 1 to 6, **characterised in that** the light source (26) can be individually adjusted and/or controlled independently of other light sources.

8. Lighting device according to claim 7, **characterised in that** the light source (26) can be controlled according to an information signal.

9. Vehicle comprising a dashboard, which has at least one instrument (10) for displaying a state variable of the vehicle, and comprising a lighting device which has a light source (26) and a light-guide body (18), in which light from the light source (26) is coupled in and guided, the light-guide body (18) having a light exit region from which light emerges from the light-guide body, the lighting device being configured according to one of the preceding claims.

## Revendications

1. Dispositif d'éclairage pour un tableau de bord d'un véhicule, lequel tableau de bord présente au moins un instrument (10) pour afficher un paramètre d'état du véhicule, dans lequel l'instrument (10) présente un cadran (14), avec une source de lumière (26) et un corps de guidage de lumière (18), dans lequel de la lumière de la source de lumière (26) est injectée et guidée, dans lequel le corps de guidage de lumière (18) présente une zone de sortie de lumière prédéfinie, par laquelle de la lumière sort du corps de guidage de lumière (18), dans lequel le corps de guidage de lumière (18) est conçu pour entourer le tableau de bord affecté au moins par zones,
dans lequel la zone de sortie de lumière (22) est conçue pour que la lumière émise par le corps de guidage de lumière (18) rayonne, dans un état annexé au tableau de bord prédéfini selon la destination, principalement dans une direction opposée à l'instrument (10), **caractérisé en ce que** la zone de sortie de lumière (22) est conçue en outre pour éclairer latéralement, avec la lumière sortant de la zone de sortie de lumière (22), un épaulement sur lequel le cadran (14) est agencé.

2. Dispositif d'éclairage selon la revendication 1, **caractérisé en ce que** le corps de guidage de lumière (18) est pourvu d'un revêtement (20) semi-transparent et/ou opaque.

3. Dispositif d'éclairage selon la revendication 2, **caractérisé en ce que** le revêtement (20) est absent dans la zone de sortie de lumière (22, 24).

4. Dispositif d'éclairage selon l'une quelconque des revendications 1 à 3, **caractérisé en ce qu'**au moins un élément diffusant la lumière est au moins en partie agencé dans la zone de sortie de lumière (22, 24).

5. Dispositif d'éclairage selon l'une quelconque des revendications 1 à 4, **caractérisé par** un élément de réglage de couleur pour la couleur de la lumière émise par le corps de guidage de lumière (18).

6. Dispositif d'éclairage selon l'une quelconque des revendications 1 à 5, **caractérisé en ce que** la zone de sortie de lumière (22, 24) présente un filtre optique.

7. Dispositif d'éclairage selon l'une quelconque des revendications 1 à 6, **caractérisé en ce que** la source de lumière (26) peut être réglée et/ou commandée individuellement indépendamment d'autres sources de lumière.

8. Dispositif d'éclairage selon la revendication 7, **caractérisé en ce que** la source de lumière (26) peut être commandée selon un signal d'information.

9. Véhicule comprenant un tableau de bord, qui présente au moins un instrument (10) pour l'affichage d'un paramètre d'état du véhicule, et un dispositif d'éclairage qui présente une source de lumière (26) et un corps de guidage de lumière, dans lequel de la lumière de la source de lumière (26) est injectée et guidée, dans lequel le corps de guidage de lumière (18) présente une zone de sortie de lumière d'où sort de la lumière du corps de guidage de lumière, dans lequel le dispositif d'éclairage est conçu selon l'une quelconque des revendications précédentes.
